# EUROPEAN PATENT APPLICATION

(11) **EP 4 574 356 A1**
(43) Date of publication of application: **25.06.2025**
(21) Application number: 23218848.2
(22) Date of filing: 20.12.2023
(51) Int. Cl.: B26B 19/38, G06N 3/08

(54) **MACHINE LEARNING RECOGNITION OF FUNCTIONAL ATTACHMENTS IN PERSONAL CARE DEVICES**

(71) Applicant: Koninklijke Philips N.V., 5656 AG Eindhoven (NL)
(72) Inventor: STEFAN, André Christian, 5656 AG Eindhoven (NL); GÖZÜTOK, Ahmet, 5656 AG Eindhoven (NL); ANGEVIN, Emilien Roland Yvan, 5656 AG Eindhoven (NL)
(74) Representative: Philips Intellectual Property & Standards

(57) **Abstract**

Disclosed herein is a handheld personal care device (100) having a housing (200) and a set of different functional attachments (102, 104, 106, 108,110) which can each be individually coupled to the housing. The handheld personal care device comprises an electrical motor (206) and a current sensor arranged within the housing. It further comprises a multiple-axis motion sensor (212) in the housing. The execution of machine-executable instructions (220) causes a computational system (214) to: activate (300) the electrical motor; receive (302) current sensor data (224) from the current sensor; receive (304) motion sensor data (226) from the motion sensor; calculate (306) a multiple-axis frequency spectrum (228) from the motion sensor data; construct (308) a feature vector (230) using the current sensor data and at least one frequency bin from at least two axes of the multiple-axis frequency spectrum; and receive (310) a control signal (232) descriptive of which functional attachment (204) of the set of different functional attachments is actually coupled to the housing in response to inputting the feature vector into a machine learning model (222).

## Description

### FIELD OF THE INVENTION

The invention relates to handheld personal care devices, in particular to the automated recognition of the type of functional attachment coupled to the main housing of the handheld personal care device.

### BACKGROUND OF THE INVENTION

Handheld personal care devices, such as shavers, may be configured to operate with a variety of functional attachments for performing various personal hygiene tasks such as shaving, beard trimming, and others. These various functional attachments have different mechanical configurations and maintenance requirements. It is, for example, preferable to adjust the operation of a handheld personal care device in dependence on the type of functional attachment that is actually used in the personal care device to accommodate these mechanical differences. For this purpose, it may be preferred to automatically detect which type of functional attachment is actually coupled to the main housing of the personal care device.

United States patent application US2022184831A1 in the name of the applicant discloses a personal care device which comprises a main body housing a motor and enabling releasable connection to any selected one of a set of different functional units. A controller of the personal care device generates an output signal associated with the selected one of the set of different functional units connected to the main body. The output signal is generated in dependence on a sensed current supplied to the motor and a sensed vibration occurring in the main body when the motor is driving the functional unit. The use of both vibration sensing and current sensing (which detects the electrical motor load resulting from driving the selected one of the functional units connected to the main body) enables multiple different functional units to be identified more reliably. In practical cases it was found that, with this known personal care device, it is possible to automatically distinguish with an acceptable degree of accuracy between three different functional units, in particular a shaving unit, a brushing unit and a beard styler.

### SUMMARY OF THE INVENTION

It is an object of the present invention to provide an improved handheld personal care device and an improved method of operating a handheld personal care device, which enable to automatically distinguish between a larger number of different functional attachments couplable to the main housing of the handheld personal care device and to increase the accuracy of automatically distinguishing between the different functional attachments.

The invention provides for a handheld personal care device, a method of operating a handheld personal care device, a computer program, and a method of training a machine learning model as defined in the independent claims. Embodiments are defined in the dependent claims.

In one aspect, in order to achieve the object as mentioned hereinbefore, the invention provides for a handheld personal care device. The handheld personal care device comprises a housing and a set of different functional attachments. The handheld personal care device further comprises a coupling interface arranged on the housing and configured to receive any one of the set of different functional attachments in a condition coupled to the housing. The handheld personal care device further comprises an electrical motor arranged within the housing and configured for powering a selected one of the set of different functional attachments actually coupled to the housing by the coupling interface. The handheld personal care device further comprises a current sensor configured for providing current sensor data descriptive of a measured electrical current supplied to the electrical motor. The handheld personal care device further comprises a multiple-axes motion sensor arranged in the housing and configured for providing motion sensor data descriptive of measured motions of the housing relative to multiple axes of the motion sensor.

The handheld personal care device further comprises a computational system configured for controlling the handheld personal care device. The handheld personal care device further comprises a memory storing machine-executable instructions and a machine learning model. The machine learning model is configured for outputting a control signal in response to receiving a feature vector descriptive of the current sensor data and the motion sensor data. The control signal is descriptive of which of the set of different functional attachments is coupled to the housing by the coupling interface.

Execution of the machine-executable instructions causes the computational system to activate the electrical motor for a predetermined time interval. Execution of the machine-executable instructions further causes the computational system to receive the current sensor data during the predetermined time interval. Execution of the machine-executable instructions further causes the computational system to receive the motion sensor data during the predetermined time interval. Execution of the machine-executable instructions further causes the computational system to calculate a multiple-axes frequency spectrum of the motion sensor data by applying a frequency-spectral transform to the motion sensor data received during the predetermined time interval. The multiple-axes frequency spectrum comprises frequency bins for at least two different axes of the multiple axes of the motion sensor. Execution of the machine-executable instructions further causes the computational system to construct the feature vector using the current sensor data and, for each of said at least two different axes of the multiple axes of the motion sensor, at least one frequency bin of the multiple-axes frequency spectrum. Execution of the machine-executable instructions further causes the computational system to receive the control signal in response to inputting the feature vector into the machine learning model.

Accurate detection of the specific type of functional attachment actually attached to the housing of the handheld personal care device over the course of device operation may be beneficial. Different functional attachments may be attached to the handheld personal care device to provide different functionality to the user and modify the function of the handheld personal care device. To properly operate the functional attachment selected for use, one or more operational parameters of the personal care device may need to be adjusted to the selected type of functional attachment. In the present invention, current sensor data descriptive of the electrical current supplied to the electrical motor of the personal care device as well as motion sensor data acquired by the multiple-axis motion sensor in the housing are used to construct a feature vector that is input for a machine learning model. In response to the feature vector, the machine learning model generates a control signal which is descriptive of the functional attachment attached to the housing. The control signal may, e.g., be used to perform a variety of different tasks, such as triggering the providing of information or instructions to the user or operator of the personal care device or configuring the handheld personal care device to operate with a functional attachment actually coupled to the handheld personal care device.

When constructing the feature vector, the motion sensor data is used to calculate a multiple-axis frequency spectrum with frequency bins. In accordance with the invention, at least one frequency bin from at least two different axes of the multiple-axis frequency spectrum are used to at least partially construct the feature vector. Constructing the feature vector using frequency bins from at least two different axes of the multiple-axis frequency spectrum and using the machine learning model to generate, in response to inputting the feature vector, the control signal, which is descriptive of which of the set of different functional attachments is coupled to the housing by the coupling interface, enables to distinguish between a larger number of different functional attachments and with greater accuracy as compared with the personal care device known from the prior art.

In US2022184831A1 detection of the functional attachment is made using bins from only a single axis of an accelerometer. In contrast to US2022184831A1, an advantage of using a machine learning mode and constructing the feature vector, as input for the machine learning model, using frequency bins from multiple axes of the multiple-axis frequency spectrum calculated from the motion sensor data is that it allows the differentiation of a larger number of functional attachments at a relatively high accuracy level. In practical tests, when data from only a single axis of the multiple-axis frequency spectrum was used, as in US2022184831A1, it was possible to differentiate only three different functional attachments with an acceptable level of accuracy (in tests: a shaving unit, a brushing unit and a beard styler). In the examples of the invention presented herein, when frequency bins from multiple axes of the multiple-axis frequency spectrum were used as input for a machine learning model, it was possible to differentiate at least five different functional attachments (in a practical case: a shaving unit, a brushing unit, a beard styler, a nose trimmer, and a precision trimmer) with a relatively high accuracy level.

The invention further provides for a method of operating a handheld personal care device. The handheld personal care device comprises a housing and a set of different functional attachments. The handheld personal care device further comprises a coupling interface arranged on the housing and configured to receive any one of the set of different functional attachments in a condition coupled to the housing. The handheld personal care device further comprises an electrical motor arranged within the housing and configured for powering a selected one of the set of different functional attachments actually coupled to the housing by the coupling interface. The handheld personal care device further comprises a current sensor configured for providing current sensor data descriptive of a measured electrical current supplied to the electrical motor. The handheld personal care device further comprises a multiple-axes motion sensor arranged in the housing and configured for providing motion sensor data descriptive of measured motions of the housing relative to multiple axes of the motion sensor. The handheld personal care device further comprises a computational system configured for controlling the handheld personal care device. The handheld personal care device further comprises a memory storing machine-executable instructions and a machine learning model.

The method comprises activating the electrical motor for a predetermined time interval. The method further comprises receiving the current sensor data during the predetermined time interval. The method further comprises receiving the motion sensor data during the predetermined time interval. The method further comprises calculating a multiple-axes frequency spectrum of the motion sensor data by applying a frequency-spectrum transform to the motion sensor data received during the predetermined time interval. The multiple-axes frequency spectrum comprises frequency bins for at least two different axes of the multiple axes of the motion sensor. The method further comprises constructing a feature vector using the current sensor data and, for each of said at least two different axes of the multiple axes of the motion sensor, at least one frequency bin of the multiple-axes frequency spectrum. The method further comprises receiving a control signal in response to inputting the feature vector into a machine learning model. The machine learning model is configured for outputting the control signal in response to receiving the feature vector. The control signal is descriptive of which of the set of different functional attachments is coupled to the housing by the coupling interface.

The invention further provides for a computer program comprising machine-executable instructions and configured for performing the method of operating a handheld personal care device according to the invention as described herein before.

The invention further provides for a method of training a machine learning model as used in the handheld personal care device according to the invention as described hereinbefore, or as used in the method of operating a handheld person care device according to the invention as described herein before.

The training method comprises repeatedly, for each respective functional attachment of the set of functional attachments, attaching at least one sample of the respective functional attachment to the coupling interface of the handheld personal care device. The training method further comprises acquiring a set of training data for the set of different functional attachments by activating, for each sample when attached to the coupling interface, the electrical motor of the handheld personal care device for the predetermined time interval. The training method further comprises, for each sample, receiving training current sensor data during the predetermined time interval from the current sensor of the handheld personal care device. The training method further comprises, for each sample, receiving training motion sensor data during the predetermined time interval from the motion sensor of the handheld personal care device. The training method further comprises, for each sample, calculating a training multiple-axis frequency spectrum of the motion sensor data by applying the frequency-spectral transform to the training motion sensor data received during the predetermined time interval for the sample. The training multiple-axis frequency spectrum comprises the frequency bins for the at least two different axes of the multiple axes of the motion sensor. The training method further comprises, for each sample, constructing a training feature vector using the training current sensor data and, for each of the at least two different axes of the multiple axes of the motion sensor, the at least one frequency bin of the training multiple-axis frequency spectrum obtained for the sample. The training method further comprises, for each sample, assigning a training control signal corresponding to the respective functional attachment attached to the coupling interface. The method further comprises, for each sample, adding the training feature vector and the training control signal obtained for the sample of the specific functional attachment to the set of training data. The method further comprises training the machine learning model using the set of training data, wherein the training feature vectors obtained for the samples are used as trial data and the training control signals obtained for the samples are used as ground truth data during the training of the machine learning model.

### BRIEF DESCRIPTION OF THE DRAWINGS

In the following preferred embodiments of the invention will be described, by way of example only, and with reference to the drawings in which:
Fig. 1 illustrates an example of a handheld personal care device with a set of different functional attachments;
Fig. 2 illustrates the handheld personal care device showing functional components;
Fig. 3 shows a flow chart which illustrates a method of using the handheld personal care device;
Fig. 4 shows a flow chart which illustrates a method of training a machine learning model;
Fig. 5 illustrates an example of a multiple-axis frequency spectrum; and
Fig. 6 illustrates a confusion matrix showing the outcome of the classification of different functional attachments using a random forest classifier as the machine learning model.

### DETAILED DESCRIPTION OF THE EMBODIMENTS

Like numbered elements in these figures are either equivalent elements or perform the same function. Elements which have been discussed previously will not necessarily be discussed in later figures if the function is equivalent.

In an example the invention provides for a handheld personal care device. The handheld personal care device may for example be a handheld device that may be used for such things as grooming or personal hygiene. One example would be a shaver or a body for a shaver configured for taking multiple types of functional attachments. The handheld personal care device comprises a housing and a set of different functional attachments. The housing may for example provide common functionality such as a motor, control electronics, a battery or other components, and the set of different functional attachments may be used to provide different functions that may for example be used for personal hygiene. The handheld personal care device further comprises a coupling interface arranged on the housing and configured to receive any one of the set of different functional attachments, as selected by the user, in a condition coupled to the housing. The handheld personal care device further comprises an electrical motor arranged within the housing and configured for powering the selected one of the set of functional attachments actually coupled to the housing by the coupling interface. The electrical motor may be used to power the functional attachment that has been attached to the housing via the coupling interface.

The handheld personal care device further comprises a current sensor configured for providing current sensor data descriptive of a measured electrical current supplied to the electrical motor. As the electrical motor is powered, the current sensor can for example measure the actual electrical current supplied to the electrical motor. This may for example be useful as a means of detecting the load placed on the electrical motor. The handheld personal care device further comprises a multiple-axis motion sensor that is arranged in the housing and configured for providing motion sensor data descriptive of measured motions of the housing relative to multiple axes of the multiple-axis motion sensor. This may for example be implemented in different ways in different examples. In one example, the multiple-axis motion sensor is physically attached or embedded into the housing. In other examples, it may for example be attached or physically connected to the housing via another component. For example, the multiple-axis motion sensor may be mounted on a printed circuit board used for providing motor control components and/or control components. References to the motion sensor herein are understood to be a reference to the multiple-axis motion sensor.

The handheld personal care device further comprises a computational system that is configured for controlling the handheld personal care device. This may for example take different forms in different examples. In one example the computational system may be a microcontroller or microprocessor. In other examples the computational system may for example be an embedded system. The handheld personal care device further comprises a memory storing machine-executable instructions and a machine learning model. The machine learning model may be executable code used to implement the machine learning model. The machine learning model is configured for outputting a control signal in response to receiving a feature vector that is descriptive of the current sensor data and the motion sensor data. The control signal is descriptive of which of the set of different functional attachments is coupled to the housing by the coupling interface. To construct the feature vector, the current sensor data and the motion sensor data may for example undergo some pre-processing. The control signal may take different forms in different examples also. In one example, the control signal simply identifies which of the set of different functional attachments is currently coupled to the housing by the coupling interface. In other examples, the control signal is an actual set of control commands or instructions that are output by the machine learning model. These may for example be used to change the function and operation of the handheld personal care device. In yet another example, the control signal is generated by the combination of the machine learning model outputting the control signal and then using this to retrieve commands stored for example in a lookup table or database.

Execution of the machine-executable instructions causes the computational system to activate the electrical motor for a predetermined time interval. This may for example be when the handheld personal care device is initially turned on. In other cases, the handheld personal care device may operate for a short period of time and then the predetermined time interval is used for activation of the electrical motor. Execution of the machine-executable instructions further causes the computational system to receive the current sensor data during the predetermined time interval. The current sensor data is then descriptive of the electrical current supplied to the electrical motor during this predetermined time interval. Execution of the machine-executable instructions further causes the computational system to receive the motion sensor data during the predetermined time interval. The current sensor data and the motion sensor data are both acquired during the predetermined time interval and are descriptive of the current drawn by the electrical motor and the motion or vibrations of the handheld personal care device caused at the same time by the driving of the functional attachment by the electric motor.

Execution of the machine-executable instructions causes the computational system to calculate a multiple-axis frequency spectrum of the motion sensor data by applying a frequency-spectral transform to the motion sensor data received during the predetermined time interval. The multiple-axis frequency spectrum may comprise a frequency spectrum calculated for each of the multiple axes of the motion sensor individually. The frequency-spectral transform may for example be a fast Fourier transform, a discreet Fourier transform or other spectral transformation such as a composition using wavelets. In accordance with the invention, the multiple-axis frequency spectrum comprises frequency bins for at least two different axes of the multiple axes of the motion sensor. This will be beneficial, because it provides data descriptive of motion of the housing in more than one axis or direction. This will provide for an improved means of detecting or determining which particular functional attachment of the set of different functional attachments is attached to the housing. This may enable proper configuration of the handheld personal care device, e.g., to provide custom feedback to the user dedicated for each different functional attachment. For example, when the housing has a light indicator to provide feedback, the light ring may indicate the pressure exerted on the skin by means of different light colors when the functional unit attached to the housing is a shaving unit, and the light ring may just be used to illuminate the skin with an invariable color when the functional unit attached to the housing is a brushing unit. The personal care device may provide, via a display, usage advice dedicated to the functional attachment attached to the housing. Alternatively particular dedicated menu options may be made available only when they are needed, e.g., in the case of a shaving unit three different motor speeds may be made available for selection by the user, in the case of a brushing unit two different motor speeds, and in the case of other types of functional attachments only one motor speed.

Execution of the machine-executable instructions further causes the computational system to construct the feature vector using the current sensor data and at least one frequency bin of the multiple-axis frequency spectrum. According to the invention, to construct the feature vector at least one frequency bin of the multiple-axis frequency spectrum is used for at least two different axes of the multiple axes of the motion sensor, preferably for more than two different axes of the motion sensor. The feature vector is therefore descriptive of particular vibrations of the housing in two or more axes or directions. Execution of the machine-executable instructions further causes the computational system to receive the control signal in response to inputting the feature vector into the machine learning model. This for example may be beneficial because it may provide for an improved means of configuring the handheld personal care device for the functional attachment that is currently attached to the housing via the coupling interface. In some examples, execution of the machine-executable instructions may also cause the computational system to provide or present the control signal. For example, the control signal may be provided to another component such as a smartphone or other handheld telecommunications device which is able to interface and communicate with the handheld personal care device. In other examples, the control signal may be used internally to select or control the machine-executable instructions in order for it to change an operational mode when powering the actually coupled functional attachment.

In an example the multiple-axis frequency spectrum comprises frequency bins for three different axes of the multiple axes of the motion sensor. Execution of the machine-executable instructions causes the computational system to construct the feature vector using, for each of said three different axes of the multiple axes of the motion sensor, at least one frequency bin of the multiple-axis frequency spectrum. This example may be beneficial because frequency bins from each of the three different axes are used. This may provide data which is descriptive of the vibrations of the housing in three different directions. This may provide for either an even more accurate identification of the different functional attachments when they are attached to the coupling interface, or it may provide for improved accuracy in selecting the control signal by the machine learning model.

In another example, execution of the machine-executable instructions causes the computational system to construct the feature vector using, for each of said three different axes of the multiple axes of the motion sensor, multiple frequency bins of the multiple-axis frequency spectrum. In this example, multiple frequency bins for each of the three different axes of the motion sensor are used. This larger amount of data may provide for more accurate identification of the different functional attachments, may enable to distinguish between a larger number of different functional attachments, and may provide for more accurate or improved generation of the control signal.

In another example, execution of the machine-executable instructions further causes the computational system to calculate, for at least one axis of the multiple axes of the motion sensor, at least one spectral statistical measure relating to multiple frequency bins of the frequency spectrum for said at least one axis. Execution of the machine-executable instructions further causes the computational system to further construct the feature vector using said at least one spectral statistical measure. A statistical measure, as used herein, is a value or quantity calculated from multiple frequency bins. It may be a statistical test or value. This example may be particularly beneficial in its ability to better differentiate between different functional attachments.

In another example, the at least one spectral statistical measure comprises a skewness of a first predefined portion of a distribution of the frequency bins of the frequency spectrum for said at least one axis.

In another example, the at least one spectral statistical measure comprises a kurtosis of a second predetermined portion of a distribution of the frequency bins of the frequency spectrum for said at least one axis. The determination of the skewness and/or the kurtosis may be beneficial because this may provide for a means of detecting more complicated movements or movement signatures of the different functional attachments.

In another example, the multiple-axis motion sensor is any one of a multiple-axis accelerometer, a multiple-axis vibration sensor, a multiple-axis fibro-meter, and a multiple-axis gyroscope. In these different examples the different types of motion sensors may have different types of pre-processing. For example, the multiple-axis fibro-meter may provide the motion data directly in the form of frequency bins. Other types of the motion sensor, such as the accelerometer, gyroscope, and vibration sensor may require a spectral decomposition or transform applied to it to provide the multiple-axis frequency spectrum.

In another example, the multiple-axis frequency spectrum of the motion sensor data is any one of the following: a fast Fourier transform (FFT) spectrum, a discrete Fourier transform (DFT) spectrum, and a wavelet transform spectrum. The fast Fourier transform spectrum may have the benefit that it requires a lower computational overhead and can be more rapidly calculated than the discrete Fourier transform spectrum or the wavelet transform spectrum. However, all three of these spectrums may provide a means of accurately calculating the multiple-axis frequency spectrum.

In another example, execution of the machine-executable instructions further causes the computational system to calculate at least one current statistical measure from the current sensor data and to construct the feature vector using the at least one current statistical measure. The current sensor data may for example comprise a time series of measurements of the current supplied to the electrical motor. Various values may be calculated from this time series of measurements and added to the feature vector. The use of a statistical measure to quantify this time series of measurements may be effective in aiding in the identification of the different functional attachments.

In another example the at least one current statistical measure comprises any one of the following: an average value, a minimum value, a maximum value, a median value, a 25th percentile value, and a 75th percentile value of the electrical current measured during the predetermined time interval, and combinations thereof. This example may be beneficial because these statistical measures all provide for an effective means of characterizing the current sensor data during the predetermined time interval.

In another example, execution of the machine-executable instructions further causes the computational system to adjust, in dependence of the control signal, an operational parameter of the handheld personal care device. For example, the control signal may be used to trigger particular control commands which cause the operational parameter of the handheld personal care device to be modified. This may for example be the amount of current supplied to the electrical motor or the speed of the electrical motor as well as other parameters such as the duration of operation before an automatic shutdown operation.

In another example, execution of the machine-executable instructions further causes the computational system to control, in dependence on the control signal, a user interface of the handheld personal care device to provide information about the functional attachments which is coupled to the housing. For example, there may be an indicator such as a display or lights which may be used to provide particular information or details about the different functional attachments. This may for example be information which assists the operator in properly using the handheld personal care device. The control signal may for example directly control the user interface or trigger commands which control the user interface to provide this information about the functional attachments.

In another example, execution of the machine-executable instructions further causes the computational system to trigger, in dependence on the control signal, the display of attachment-specific operator instructions by a display. The attachment-specific operator instructions may for example be instructions which provide information on the maintenance, repair or use of that particular attachment. In some examples, the attachment-specific operator instructions may be details which may be followed for repair of the handheld personal care device. In some examples, the display may be part of the handheld personal care device. In other examples, the display may for example be a display of a different device such as a smartphone or handheld personal computing or telecommunications device.

In another example, the machine learning model is or comprises any one of the following: a Random Forest Classifier, a Support Vector Machine, a k-Nearest Neighbors algorithm, a Naive Bayes algorithm, a decision tree, a Gradient Boosting Classifier, a feedforward neural network, a convolutional neural network, and a recurrent neural network.

A Random Forest Classifier (RFC) algorithm may be used to implement the machine learning model. RFCs combine multiple decision trees (hence the name "Forest"), each one being trained on a random subset of features of the feature vector (hence the name "Random"). The random trees make independent predictions, which are then decided upon based on a majority voting approach. As RFCs are ensemble methods, they are less prone to overfitting, meaning that they enable to remove the noise-related patterns and increase the stability of the classification process. In the invention, an RFC may distinguish between 5 classes, i.e., one for each type of different functional attachment.

An advantage of the RFC approach includes its effectiveness for high-dimensional datasets, robustness (less prone to overfitting), computational efficiency (due to parallelization capability of the training process), and the ability to handle complex data efficiently. Another advantage of using an RFC is that it typically requires less training data than a neural network.

Alternatives to the use of a random forest classifier may be categorized into three types: classical machine learning methods, ensemble machine learning methods and artificial neural network methods. The potential for handling complex, high-dimensional data with a high-level of accuracy and generalization is unlocked by artificial neural networks, while ensemble models provide robustness, and classical machine learning is best suited for simpler, well-defined problems.

Classical machine learning models are the fundamental algorithms for machine learning problems, as they primarily use statistical and mathematical methods to classify or predict data. These models are interpretable and ideal for structured data because they depend on clearly defined features and data preprocessing.

The training process of classical machine learning models generally involves two stages. The first stage involves data pre-processing, where feature engineering and cleaning play a critical role. The second stage involves training of the model using algorithms that minimize a predetermined loss function. These models are trained based on well-defined features.

A Support Vector Machine (SVM) algorithm operates by identifying the ideal hyperplane for dividing the data into multiple classes. The margin, or the distance between the hyperplane and the closest data points from each class (also referred to as support vectors) is maximized. SVM looks for the hyperplane that minimizes classification errors and effectively classifies training data while also having good generalization to new data. In case the data cannot be separated linearly, SVM can use kernel functions to convert data into a higher-dimensional space where a separating hyperplane can be created. This gives SVM robustness and strong generalization capabilities, making it a flexible and effective tool for this type of application.

A k-Nearest Neighbors (k-NN) algorithm is a non-parametric, instance-based machine learning method. K-NN works by analyzing the dataset and finding the k-nearest data points in the feature space, using a chosen distance metric (usually Euclidean distance). K-NN is helpful for complex problems because its decision boundary is both adaptive and dependent on the data distribution.

A Naive Bayes (NB) algorithm is a probabilistic machine learning algorithm based on the Bayes theorem, that makes the assumption that each class of features is conditionally independent of the others. Through the Bayes theorem, it can determine which class has the highest probability based on the observed feature values. A variant of the NB algorithm is Gaussian Naive Bayes, which models each class as a Gaussian distribution.

A Decision Tree (DT) algorithm works toward the creation of a tree structure that can precisely predict the target variable, by recursively dividing the data into subsets according to the most important feature at each node. The best split is determined by the algorithm, which usually maximizes information gain during classification to choose the best features.

An Ensemble machine learning model works by combining the results of several base models to improve predictive performance. By combining the strengths of several algorithms, methods like Random Forests and Gradient Boosting help to reduce the shortcomings of individual models, as well as to increase overall accuracy. Ensemble machine learning methods are generally robust and can handle noise and non-linearity well.

The training process of Ensemble machine learning models consists of independently trained base models. The Ensemble model is created by combining the outputs of each base model that has been trained using a particular algorithm or technique. The base model predictions are aggregated using methods such as bagging, boosting, or stacking. In order to make up for the shortcomings of each individual model, this process makes use of the diversity of the base models to produce predictions that are more accurate overall.

A Gradient Boosting Classifier (GBC) algorithm creates a strong predictive model by combining several weaker learners, usually decision trees. It works in an iterative manner, with each new tree concentrating on fixing the mistakes made by the ones before it. By fitting a new weak learner to the weighted data in each iteration, the algorithm begins by assigning initial weights to the training data and minimizes a loss function, usually the deviance (cross-entropy) for classification. Each weak learner contributes a prediction to the ensemble that is weighted by their learning rate and is added to it successively. This process keeps going until a predetermined number of iterations or a stop condition is satisfied. Well-known implementations of this method include XGBoost, AdaBoost, and LightGBM.

Artificial Neural Networks (ANN) are computational models made up of interconnected layers of artificial neurons. Each neuron applies an activation function to the weighted sum of its inputs, and each connection between neurons has a corresponding weight. Neural networks learn how to modify these weights using optimization techniques like gradient descent and backpropagation in order to minimize a given loss or error function during training.

The training process of ANNs involves a unique methodology, as it uses both forward and backward propagation. First, information is sent over the neural network, and the result is compared with the actual target. The model's weights and biases are then modified by backpropagating errors using optimization techniques like stochastic gradient descent. Iterative training is used until the model converges to a performance level that is acceptable.

A Feedforward Neural Network (FNN), also known as a multilayer perceptron, consists of several layers of interconnected artificial neurons. Information moves from the input layer to one or more hidden layers, then to the output layer. A weighted sum of the inputs from each neuron in a layer is applied, along with a bias and an activation function (usually a non-linear function such as the sigmoid or ReLU) to process the result. Using optimization methods like gradient descent and backpropagation, the network learns during training how to modify the weights and biases in order to minimize a given loss function.

A Convolutional Neural Network works by employing three types of layers: convolutional layers, pooling layers and fully connected layers. Convolutional layers preserve spatial relationships and feature hierarchies by using learnable filters to scan and capture local patterns in the input data. Pooling layers reduce dimensionality and computational complexity without sacrificing critical information, by down sampling the data. These features are then combined by the fully connected layers, which use the information they have retrieved to make predictions.

Recurrent Neural Networks (RNN) have connections that loop back on themselves, and they are able to keep track of information about earlier inputs in the sequence in a hidden state. RNNs are crucial in many sequential data applications because they can model sequences of various lengths and are frequently used in tasks requiring memory of prior inputs.

In another example, the set of different functional attachments comprises any one of the following: a shaving unit, a beard styler, a brushing unit, a precision trimmer, a nose trimmer, and combinations thereof. The handheld personal care device may be an electric shaving device or shaver comprising a main body or handle and a shaving unit coupled to the main body, wherein the user may manually replace the shaving unit by any functional unit of a set of different functional unit including the examples as mentioned herein before.

According to another aspect of the invention, a machine learning model for use in a handheld personal care device in accordance with the invention as described hereinbefore is trained, using the handheld personal care device, by acquiring training data and training the machine learning model using the acquired training data. The handheld personal care device comprises a housing and a set of different functional attachments. The handheld personal care device further comprises a coupling interface arranged on the housing and configured to receive any one of the set of different functional attachments in a condition coupled to the housing. The handheld personal care device further comprises an electrical motor arranged within the housing and configured for powering a selected one of the set of different functional attachments actually coupled to the housing by the coupling interface. The handheld personal care device further comprises a current sensor that is configured for providing current sensor data descriptive of a measured electrical current applied to the electrical motor. The handheld personal care device further comprises a multiple-axis motion sensor that is arranged in the housing and configured for providing motion sensor data that is descriptive of measured motions of the housing relative to the multiple axes of the motion sensor.

The method of training comprises repeatedly, for each respective functional attachment of the set of different functional attachments, attaching at least one sample of the respective functional attachment to the coupling interface of the handheld personal care device. During the training process, a single sample of each particular functional attachment of the set of different functional attachments may be used to acquire a set of training data. Alternatively, two or more than two samples may be used for some particular functional attachments or for each functional attachment of the set of different functional attachments to acquire the set of training data. In this case, the set of different functional attachments used to acquire the set of training data may include more than one copy of a particular type or particular types of functional attachment.

The method of training further comprises repeatedly, i.e. for each sample used to acquire the set of training data, activating the electrical motor of the handheld personal care device for a predetermined time interval, receiving training current sensor data during the predetermined time interval from the current sensor of the handheld personal care device, receiving training motion sensor data during the predetermined time interval from the motion sensor of the handheld personal care device, and calculating a training multiple-axis frequency spectrum of the motion sensor data by applying the frequency-spectral transform to the training motion sensor data received during the predetermined time interval. The training multiple-axis frequency spectrum comprises the frequency bins for the at least two different axes of the multiple axes of the motion sensor. The method further comprises repeatedly, i.e. for each sample used to acquire the set of training data, constructing a training feature vector using the training current sensor data obtained for the sample and, for each of the at least two different axes of the multiple axes of the motion sensor, at least one frequency bin of the multiple-axis frequency spectrum obtained for the sample.

The method further comprises repeatedly, i.e. for each sample used to acquire the set of training data, assigning a training control signal corresponding to the respective functional attachment attached to the coupling interface when the training current sensor data and the training motion sensor data for said respective functional attachment were acquired. The training control signal may for example be provided or annotated manually. In some examples the training control signal may be an identification or identifier which is descriptive or identifies the respective functional attachment of the set of different functional attachments. In this case the training control signal could be assigned at the time that the respective functional attachment is attached to the coupling interface. In other cases, the training control signal is a set of commands used to modify the behavior or function of the handheld personal care device or used to modify or control a different device or apparatus.

The training method further comprises repeatedly, i.e. for each sample used to acquire the set of training data, adding the training feature vector and the training control signal obtained for said sample to the set of training data. For example, this process may be repeated many times to collect pairs of data that may be added to the training data. For training of the machine learning model using the set of training data, the training feature vectors in the set of training data are used as input to the machine learning model and the training control vectors in the set of training data provide a ground truth to compare the output of the machine learning model during training. The training method further comprises training the machine learning model using the set of training data.

In an example of the method of training the machine learning model, the set of training data used for the training comprises, for each respective functional attachment of the set of different functional attachments, training feature vectors and training control signals obtained for multiple samples of the respective functional attachment. The multiple samples for each respective functional attachment of the set of different functional attachments may comprise any one of the following: identical samples, samples with different wear levels, samples with different cleanliness levels, and combinations thereof. In addition to the existence of minor mechanical differences or tolerances between samples of a functional attachment of the same type, the current sensor data and the motion sensor data for a particular type of functional attachment may change due to wear as the functional attachment ages or due to soiling or pollution through use. In this example of the training method, the set of different functional attachments used to acquire the set of training data is expanded to include multiple samples of a particular type of functional attachment which have different levels of wear and different levels of cleanliness. This may be beneficial because, when a functional attachment wears out or becomes dirty during prolonged use, the particular motor current required to drive the functional attachment and even the vibrations of the housing caused by driving the functional attachment may change or vary. By using samples of the functional attachments having different wear levels and different cleanliness levels during training, the accuracy of the machine learning model in distinguishing a particular type of functional attachment out of the set of different functional attachment will be significantly improved under practical use circumstances.

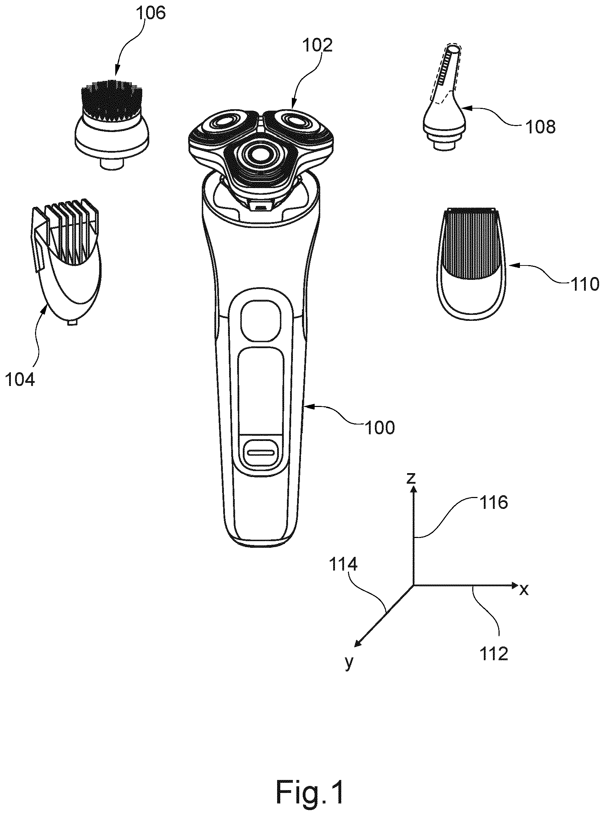

Fig. 1 illustrates an example of a handheld personal care device 100 according to the present invention. The handheld personal care device 100 is shown with a set of five different functional attachments 102, 104, 106, 108, 110. Functional attachment 102 is a shaving unit. In this example the shaving unit comprises three hair-cutting units of a rotary type which are well-known to the skilled person. Functional attachment 104 is a beard styler, in this example comprising a hair-cutting unit of a linearly reciprocating type. Functional attachment 106 is a brushing unit, in this example comprising a rotating brush. Functional attachment 108 is a nose trimmer. Functional attachment 110 is a precision trimmer. Each of the functional attachments 102, 104, 106, 108, 110 may be mounted on a housing of the handheld personal care device 100 and used. The housing constitutes a handle of the handheld personal care device. Furthermore, there is a multiple-axis motion sensor within the housing of the handheld personal care device 100. Fig. 1 illustrates the measurement directions of three axes x (112), y (114), and z (116) of the multiple-axis motion sensor. The coordinates system x, y, z illustrates the different directions in which the multiple-axis motion sensor can acquire motion sensor data.

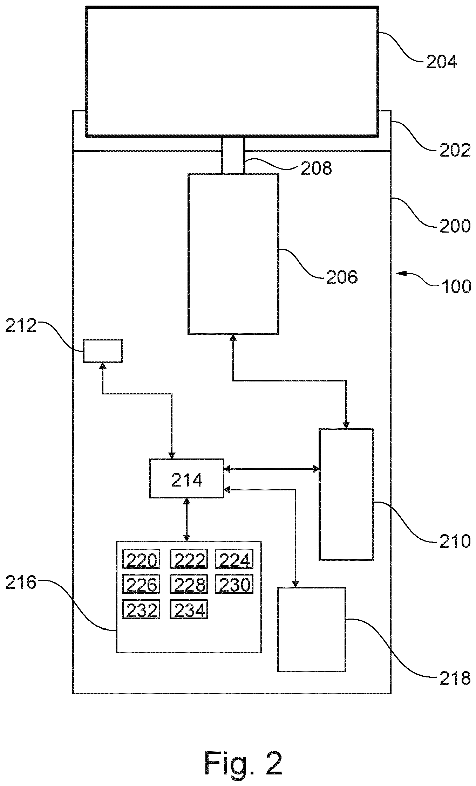

Fig. 2 shows a further schematic view of the handheld personal care device 100. The handheld personal care device 100 is shown as comprising a housing 200 with a coupling interface 202. The coupling interface 202 provides a releasable coupling structure for any selected one 204 of the set of functional attachments 102, 104, 106, 108, 110 to the housing 200. Suitable coupling interfaces are well-known to the skilled person, such as disclosed by EP2086729B2 in the name of the applicant. The handheld personal care device 100 is shown as further comprising an electrical motor 206 arranged in the housing 200 and having a mechanical coupling 208 for providing mechanical coupling 208 between the electrical motor 206 and the selected one 204 of the set of different functional attachments 102, 104, 106, 108, 110 coupled to the coupling interface 202 for powering the selected functional attachment 204. There is a current source 210 which includes also a current sensor in this example. The current source 210 is used to provide electric current to the electrical motor 206 and also measure the actual current supplied to the motor 206 by the current source 210. There is a multiple-axis motion sensor 212 that is in mechanical contact with or incorporated into the housing 200. There is a computational system 214 that is configured for controlling the operation and function of the handheld personal care device 100 including the operation of the current source 210 for powering the electrical motor 206. The computational system 214 is shown as being in communication with the multiple-axis motion sensor 212 as well as the current source 210. The computational system 214 is further shown as being in communication with a memory 216 and an optional display 218. The display 218 may for example be able to display the operational status of the handheld personal care device 100 as well as provide instructions or messages to the user or operator of the handheld personal care device 100.

The memory 216 is shown as containing machine-executable instructions 220. The machine-executable instructions 220 enable the computational system 214 to control the operation and function of the handheld personal care device 100 as well as provide basic data analysis and manipulation tasks. The memory 216 is further shown as containing a machine learning model 222. The memory 216 is further shown as containing current sensor data 224 that was received from the current sensor of the current source 210. The memory 216 is further shown as containing motion sensor data 226 that was received from the motion sensor 212. The memory 216 is further shown as containing a multiple-axis frequency spectrum 228 calculated from the motion sensor data 226. The memory 216 is further shown as containing a feature vector 230 that was constructed from the current sensor data 224 and the multiple-axis frequency spectrum 228. The memory 216 is further shown as containing a control signal 232 that was received in response to inputting the feature vector 230 into the machine learning model 222. The control signal 232 may be used to trigger the display 218 to display message 234, to adjust the function of the handheld personal care device 100, or even to provide data or information to an additional or external device such as a smartphone or portable computing device.

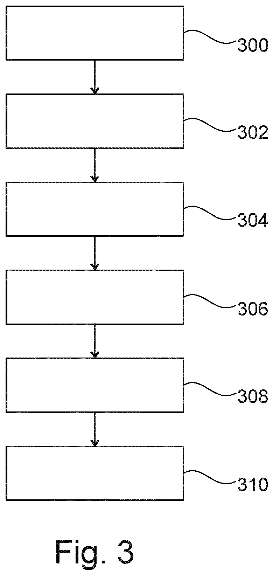

Fig. 3 shows a flowchart which illustrates a method of operating the handheld personal care device 100. The method may be performed by the computational system 214 by execution of the machine-executable instructions 220 contained by the memory 216. In step 300, the electrical motor 206 is activated for a predetermined time interval. In step 302, the current sensor data 224 is received from the current sensor of the current source 210. The current sensor data was acquired during the predetermined time interval. In step 304, the motion sensor data 226 is received from the motion sensor 212. The motion sensor data 226 was acquired during the predetermined time interval. In step 306, the multiple-axis frequency spectrum 228 is calculated from the motion sensor data 226 by applying a frequency-spectral transform to the motion sensor data 226. In step 308, the feature vector 230 is constructed using the current sensor data 224 acquired during the predetermined time interval and using frequency bins of the multiple-axis frequency spectrum 228 from at least two different axes of the multiple axes of the motion sensor 212. In step 310, the control signal 232 is received in response to inputting the feature vector 230 into the machine learning model 222.

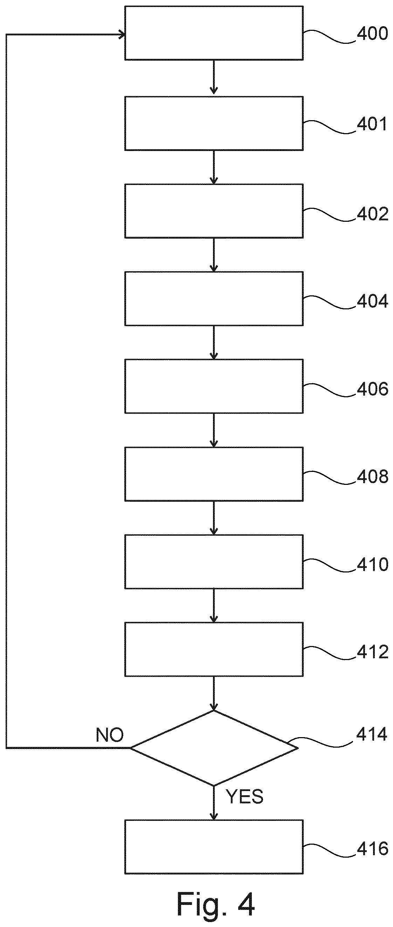

Fig. 4 illustrates a method of training the machine learning model 222. In the method illustrated in Fig. 4, the handheld personal care device 100 is used to collect a set of training data. The set of training data comprises pairs of training feature vectors and training control signals. The training feature vectors may be input into the machine learning model 222 and the output of the machine learning model 222 is then compared against the training control signals. This for example may be used in a deep learning type training if the machine learning model is a neural network. Steps 400-414 involve the collection of the set of training data and step 416 is the actual training step.

In step 400, a sample of a specific functional attachment of the set of different functional attachments 102, 104, 106, 108, 110 is attached to the coupling interface 202. The step 400 and the following steps 402-414 may be repeated for each sample of each specific functional attachment of the set of different functional attachments 102, 104, 106, 108, 110 used to acquire the set of training data, as will be described hereinafter. In some examples of the method, multiple samples of a specific type of functional attachment or of each specific type of functional attachment may be used to acquire the set of training data, so that multiple samples of each different functional attachment may need to be measured. This may include multiple identical samples of the same type of functional attachment as well as multiple samples of the same type of functional attachment having different amounts of wear and/or cleanliness.

In step 400, the electrical motor 206 is activated for the predetermined time interval. In step 402, training current sensor data is received from the current sensor of the current source 210 during the predetermined time interval. In step 404, training motion sensor data is received during the predetermined time interval from the multiple-axis motion sensor 212. In step 406, a training multiple-axis frequency spectrum is calculated from the training motion sensor data by applying the frequency-spectral transform to the training motion sensor data received during the predetermined time interval. The training multiple-axis frequency spectrum comprises the frequency bins for the at least two different axes of the multiple axes of the motion sensor 212. In step 408, a training feature vector is constructed using the training current sensor data and, for each of the at least two different axes of the multiple axes of the motion sensor 212, the at least one frequency bin of the training multiple-axis frequency spectrum. In step 410, a training control signal corresponding to the respective functional attachment attached to the coupling interface 202 is assigned.

The training control signal for example may be an identifier or indication of which type of functional attachment 102, 104, 106, 108, 110 is attached to the coupling interface 202. The training control signal may for example be annotated manually. In step 412, the training feature vector and the training control signal obtained for the sample of the specific functional attachment are added to the set of training data. This is for example one dataset. In step 414, which is a decision step, the question "Is all of the training data collected?" is asked. If the answer is "no", the method proceeds back to step 400 and the steps 400-414 are to be repeated for a next sample until all samples have been measured and all training data are accumulated. If the answer is "yes", the method proceeds to step 416. In step 416, the machine learning model 222 is trained using the collected set of training data.

As a concrete example, a Random Forest Classifier (RFC) algorithm was used to implement the machine learning model. As was previously discussed above, RFCs combine multiple decision trees (hence the name "Forest"), each one being trained on a random subset of features of the feature vector (hence the name "Random").

In this example, the brushing unit 106 and the shaving unit 102 performs a rotational movement around the z-axis of the motion sensor 212, hence for these units the vibration of the housing 200 mainly occurs on the Z-axis. The beard styler 104 and the precision trimmer 110 have hair-cutting blades that reciprocate parallel to the y-axis of the motion sensor 212, which causes vibrations mainly on the y-axis of the motion sensor 212. Although the beard styler 104 and the precision trimmer 110 are similar in terms of orientation of the vibrations, they have different masses, with the beard styler 104 being much heavier than the precision trimmer 110, thus causing stronger vibrations. The nose trimmer 108 has a hair-cutting blade that reciprocates along an axis tilted relative to the z-axis of the motion sensor 212, so the vibration caused by the nose trimmer 108 occurs on more than one axis of the motion sensor 212. However, as the blade movement is very small, this vibration may be very small.

Due to the nature of the data, as well as its complexity, a modified Decision Tree-based algorithm was used, namely a Random Forest Classifier algorithm. This is a Supervised Ensemble Learning method, meaning that it combines multiple algorithms to obtain more accurate results.

This type of algorithm uses recursive binary splitting, also known as top-down greedy approach, which begins at the "top" where all features of the feature vector are available and splits the predictor space successively into new branches as it moves down the tree. Furthermore, multiple random trees are made, in this way creating the Random Forest, and each individual tree selects different feature samples for splitting. Then, each individual tree calculates and generates its own prediction on the target variable, in this case the type of functional attachment, which is averaged over all the predictions produced by all the created trees, to produce a single result. The averaging method of the Random Forest algorithm aims to improve the accuracy, as well as to reduce overfitting.

In particular, to acquire the set of training data used to train the machine learning model as described hereinbefore, four different samples of each specific functional attachment of the set of functional attachments 102, 104, 106, 108, 110 were included in the data acquisition process, i.e.:
"New and Clean": the functional attachment is unused and clean;
"New and Polluted": the functional attachment is unused, but it went through a pollution process to mimic a practical level of pollution;
   - "Worn and Clean": the functional attachment is clean went through a wearing-off process to mimic a practical level of wear; and
   - "Worn and Polluted": the functional attachment went through the wear-off process as well as through the pollution process.

The use of these four different samples for each type of different functional attachment 102, 104, 106, 108, 110 made it possible to significantly improve the robustness of the functional attachment classification functionality of the machine learning model.

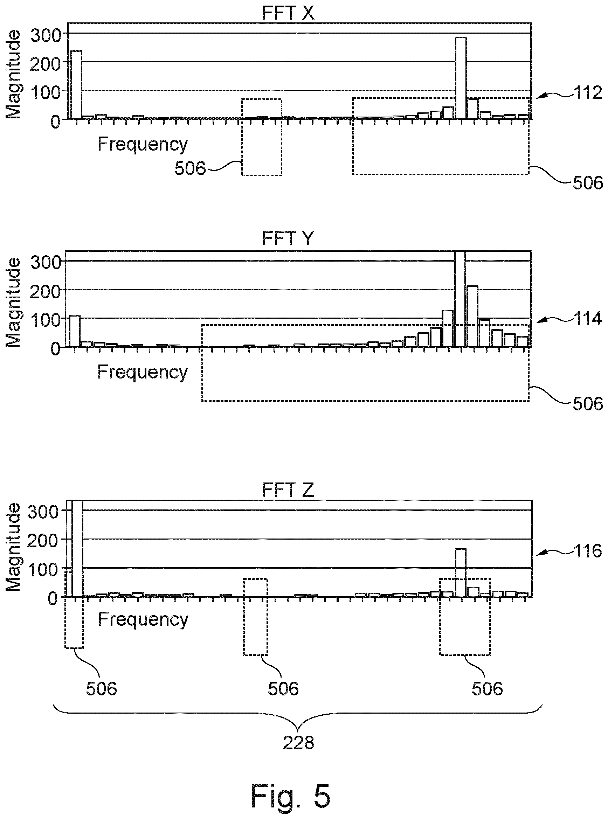

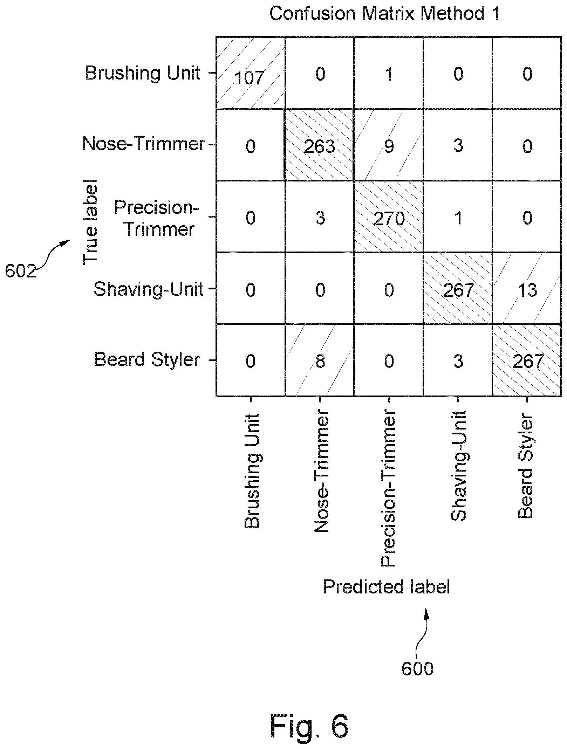

Fig. 5 illustrates an example of the multiple-axis frequency spectrum 228 for one of the functional attachments. The frequency spectrums for the x-axis 112, the y-axis 114 and the z-axis 116 of the motion sensor 212 are shown separately. The multiple-axis frequency spectrum 228 was calculated by applying a fast Fourier transform to the motion sensor data 226 for each axis 112, 114, 116. In this figure the horizontal axes (labeled Frequency) represent in arbitrary units frequency bins, and the vertical axes (labeled Magnitude) represent in arbitrary units the value of the Fourier transform for a particular frequency bin. The boxes labeled 506 in fig. 5 indicate, for each of the three axes 112, 114, 116 of the motion sensor 212, the frequency bins which were used to construct the feature vector 230. The feature vector for this example would be constructed using frequency bins from all three axes 112, 114, 116. In addition to these frequency bins 506, three current statistical measures, i.e. the average value, the minimum value, and the maximum value of the electrical current measured during the predetermined time interval, and two spectral statistical measures relating to the frequency bins of the x-axis 112 of the multiple-axis frequency spectrum 228, i.e. the skewness and kurtosis, were used to construct the feature vector 230. Fig. 6 shows a confusion matrix indicating the results of the classification of the five different functional attachments 102, 104, 106, 108, 110 by means of the machine learning model trained in the manner as described hereinbefore. The predicted labels 600 (output of the machine learning model) are indicated on the horizontal axis, and the true labels 602 are indicated on the vertical axis. From this confusion matrix it can be seen that the machine learning model was very effective in differentiating between the five different types of functional attachments 102, 104, 106, 108, 110. In particular, the recognition accuracy obtained by the machine learning model was 97%.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A `computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or `display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen,

Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: handheld personal care device
- 102: functional attachment: shaving unit
- 104: functional attachment: beard styler
- 106: functional attachment: brushing unit
- 108: functional attachment: nose trimmer
- 110: functional attachment: precision trimmer
- 112: X axis
- 114: Y axis
- 116: Z axis
- 200: housing
- 202: coupling interface
- 204: one of the set of functional attachments
- 206: electrical motor
- 208: mechanical coupling
- 210: current source / current sensor
- 212: multiple-axis motion sensor
- 214: computational system
- 216: memory
- 218: optional display
- 220: machine executable instructions
- 222: machine learning model
- 224: current sensor data
- 226: motion sensor data
- 228: multiple-axis frequency spectrum
- 230: feature vector
- 232: control signal
- 234: message
- 300: activate the electrical motor for a predetermined time interval
- 302: receive the current sensor data during the predetermined time interval from the current sensor
- 304: receive the motion sensor data during the predetermined time interval from the multiple-axis motion sensor
- 306: calculate a multiple-axis frequency spectrum of the motion sensor data by applying a frequency-spectral transform to the motion sensor data received during the predetermined time interval
- 308: construct the feature vector using the current sensor data and, for each of said at least two different axes of the multiple axes of the multiple-axis motion sensor, at least one frequency bin of the multiple-axis frequency spectrum
- 310: receive the control signal in response to inputting the feature vector into the machine learning model
- 400: attaching one of the different set of different functional attachments to the coupling interface
- 401: activating the electrical motor for a predetermined time interval
- 402: receiving training current sensor data during the predetermined time interval
- 404: receiving training motion sensor data during the predetermined time interval
- 406: calculating a training multiple-axis frequency spectrum of the motion sensor data by applying a frequency-spectral transform to the training motion sensor data received during the predetermined time interval, wherein the training multiple-axis frequency spectrum comprises frequency bins for at least two different axes of the multiple axes of the multiple-axis motion sensor
- 408: constructing the training feature vector using the training current sensor data and, for each of said at least two different axes of the multiple axes of the multiple-axis motion sensor, at least one frequency bin of the training multiple-axis frequency spectrum
- 410: receiving a training control signal
- 412: providing the training feature vector and the training control signal as the training data
- 414: all training data collected?
- 416: training the machine learning model using the training data
- 506: FFT bins
- 600: predicted labels
- 602: true label

## Claims

1. A handheld personal care device (100) comprising:
- a housing (200) and a set of different functional attachments (102, 104, 106, 108,110);
- a coupling interface (202) arranged on the housing and configured to receive any one of the set of different functional attachments in a condition coupled to the housing;
- an electrical motor (206) arranged within the housing and configured for powering a selected one of the set of different functional attachments actually coupled to the housing by the coupling interface;
- a current sensor (210) configured for providing current sensor data (224) descriptive of a measured electrical current supplied to the electrical motor;
- a multiple-axis motion sensor (212) arranged in the housing and configured for providing motion sensor data (226) descriptive of measured motions of the housing relative to multiple axes (112, 114, 116) of the motion sensor;
- a computational system (214) configured for controlling the handheld personal care device;
- a memory (216) storing machine executable instructions and a machine learning model (222), wherein the machine learning model is configured for outputting a control signal (232) in response to receiving a feature vector (230) descriptive of the current sensor data and the motion sensor data, wherein the control signal is descriptive of which of the set of different functional attachments is coupled to the housing by the coupling interface;
wherein execution of the machine executable instructions causes the computational system to:
- activate (300) the electrical motor for a predetermined time interval;
- receive (302) the current sensor data during the predetermined time interval from the current sensor;
- receive (304) the motion sensor data during the predetermined time interval from the multiple-axis motion sensor;
- calculate (306) a multiple-axis frequency spectrum (228) of the motion sensor data by applying a frequency-spectral transform to the motion sensor data received during the predetermined time interval, wherein the multiple-axis frequency spectrum comprises frequency bins (506) for at least two different axes of the multiple axes of the motion sensor;
- construct (308) the feature vector using the current sensor data and, for each of said at least two different axes of the multiple axes of the motion sensor, at least one frequency bin of the multiple-axis frequency spectrum; and
- receive (310) the control signal in response to inputting the feature vector into the machine learning model.

2. The handheld personal care device (100) as claimed in claim 1, wherein the multiple-axis frequency spectrum comprises frequency bins (506) for three different axes (112, 114, 116) of the multiple axes of the motion sensor (212), and wherein execution of the machine executable instructions (220) causes the computational system (214) to construct the feature vector (230) using, for each of said three different axes of the multiple axes of the motion sensor, at least one frequency bin of the multiple-axis frequency spectrum.

3. The handheld personal care device (100) as claimed in claim 2, wherein execution of the machine executable instructions (220) causes the computational system (214) to construct the feature vector using, for each of said three different axes (112, 114, 116) of the multiple axes of the motion sensor, multiple frequency bins of the multiple-axis frequency spectrum.

4. The handheld personal care device (100) as claimed in any of the preceding claims, wherein execution of the machine executable instructions (220) further causes the computational system (214) to:
- calculate, for at least one axis of the multiple axes (112, 114, 116) of the multiple-axis motion sensor (212), at least one spectral statistical measure relating to multiple frequency bins of the frequency spectrum for said at least one axis: and
- construct the feature vector further using said at least one spectral statistical measure.

5. The handheld personal care device (100) as claimed in claim 4, wherein the at least one spectral statistical measure comprises any one of the following: a skewness of a first predetermined portion of a distribution of the frequency bins of the frequency spectrum for said at least one axis, a kurtosis of a second predetermined portion of a distribution of the frequency bins of the frequency spectrum for said at least one axis, and combinations thereof.

6. The handheld personal care device (100) as claimed in any of the preceding claims, wherein the multiple-axis motion sensor (212) is any one of the following: a multiple-axis accelerometer, a multiple-axis vibration sensor, a multiple-axis vibro-meter, and a multiple-axis gyroscope.

7. The handheld personal care device (100) as claimed in any one of the preceding claims, wherein the multiple-axis frequency spectrum (228) of the motion sensor data (226) is any one of the following: a fast Fourier transform (FFT) spectrum, a discrete Fourier transform (DFT) spectrum, and a wavelet transform spectrum.

8. The handheld personal care device (100) as claimed in any one of the preceding claims, wherein execution of the machine executable instructions (220) further causes the computational system (214) to:
- calculate at least one current statistical measure from the current sensor data; and
- construct the feature vector (230) using the at least one current statistical measure.

9. The handheld personal care device (100) as claimed in claim 8, wherein the at least one current statistical measure comprises any one of the following: an average value, a minimum value, a maximum value, a median value, a 25^{th} percentile value, and a 75^{th} percentile value of the electrical current measured during the predetermined time interval, and combinations thereof.

10. The handheld personal care device (100) as claimed in any one of the preceding claims, wherein execution of the machine executable instructions (220) further causes the computational system (214) to:
- adjust, in dependence on the control signal (232), an operational parameter of the handheld personal care device; and/or
- control, in dependence on the control signal, a user interface of the handheld personal care device to provide information about the functional attachments which is coupled to the housing; and/or
- trigger, in dependence on the control signal, the display of attachment-specific operator instructions by a display (218).

11. The handheld personal care device (100) as claimed in any one of the preceding claims, wherein the machine learning model (222) comprises any one of the following: a Random Forest Classifier, a Support Vector Machine, a k-Nearest Neighbors algorithm, a Naive Bayes algorithm, a decision tree, a Gradient Boosting Classifier, a Feedforward Neural Network, a Convolutional Neural Network, and a Recurrent Neural Network.

12. The handheld personal care device as claimed in any one of the preceding claims, wherein the set of different functional attachments comprises any one of the following: a shaving unit (102), a beard styler (104), a brushing unit (106), a precision trimmer (110), a nose trimmer (108), and combinations thereof.

13. A method of operating a handheld personal care device (100), wherein the handheld personal care device comprises:
- a housing (200) and a set of different functional attachments (102, 104, 106, 108, 110);
- a coupling interface (202) arranged on the housing and configured to receive any one of the set of different functional attachments in a condition coupled to the housing;
- an electrical motor (206) arranged within the housing and configured for powering a selected one of the set of different functional attachments actually coupled to the housing by the coupling interface;
- a current sensor (210) configured for providing current sensor data (224) descriptive of a measured electrical current supplied to the electrical motor;
- a multiple-axis motion sensor (212) arranged in the housing and configured for providing motion sensor data (226) descriptive of measured motions of the housing relative to multiple axes of the multiple-axis motion sensor;
- a computational system (214) configured for controlling the handheld personal care device;
- a memory (216) storing machine executable instructions and a machine learning model;
wherein the method comprises:
- activating (300) the electrical motor for a predetermined time interval;
- receiving (302) the current sensor data during the predetermined time interval;
- receiving (304) the motion sensor data during the predetermined time interval;
- calculating (306) a multiple-axis frequency spectrum (228) of the motion sensor data by applying a frequency-spectral transform to the motion sensor data received during the predetermined time interval, wherein the multiple-axis frequency spectrum comprises frequency bins for at least two different axes of the multiple axes of the motion sensor;
- constructing (308) a feature vector (230) using the current sensor data and, for each of said at least two different axes of the multiple axes of the motion sensor, at least one frequency bin of the multiple-axis frequency spectrum; and
- receiving (310) a control signal (223) in response to inputting the feature vector into a machine learning model (222), wherein the machine learning model is configured for outputting the control signal in response to receiving the feature vector, wherein the control signal is descriptive of which of the set of different functional attachments is coupled to the housing by the coupling interface.

14. A computer program comprising machine executable instructions and configured for performing the method of claim 13.

15. A method of training a machine learning model (222) as used in the handheld personal care device (100) as claimed in any one of claims 1 to 12 or in the method of operating a handheld personal care device as claimed in claim 13, wherein the training method comprises repeatedly, for each respective functional attachment of the set of different functional attachments:
- attaching (400) at least one sample of the respective functional attachment to the coupling interface (202) of the handheld personal care device;
- activating (401) the electrical motor (206) of the handheld personal care device for the predetermined time interval;
- receiving (402) training current sensor data during the predetermined time interval from the current sensor of the handheld personal care device;
- receiving (404) training motion sensor data during the predetermined time interval from the motion sensor of the handheld personal care device;
- calculating (406) a training multiple-axis frequency spectrum of the motion sensor data by applying the frequency-spectral transform to the training motion sensor data received during the predetermined time interval, wherein the training multiple-axis frequency spectrum comprises the frequency bins (506) for the at least two different axes of the multiple axes of the motion sensor;
- constructing (408) a training feature vector using the training current sensor data and, for each of the at least two different axes of the multiple axes of the motion sensor, the at least one frequency bin of the training multiple-axis frequency spectrum;
- assigning (410) a training control signal corresponding to the respective functional attachment attached to the coupling interface; and
- adding (412) the training feature vector and the training control signal obtained for said at least one sample of the specific functional attachment to a set of training data;
wherein the method further comprises training (416) the machine learning model using the set of training data, wherein the training feature vectors are used as trial data and the training control signals are used as ground truth data during the training of the machine learning model.

16. The method of claim 15, wherein the set of training data used for training comprises, for each respective functional attachment of the set of different functional attachments, training feature vectors and training control signals obtained for multiple samples of the respective functional attachment, comprising identical samples, and/or samples with different wear levels, and/or samples with different cleanliness levels, and/or combinations thereof.
